# EUROPEAN PATENT APPLICATION

(11) **EP 4 783 455 A1**
(43) Date of publication of application: **29.07.2026**
(21) Application number: 26153527.2
(22) Date of filing: 22.01.2026
(51) Int. Cl.: H02S 20/23, H02S 20/24

(54) **PHOTOVOLTAIC SYSTEM**

(30) Priority: 27.01.2025 IT 202500001404
(71) Applicant: Iannuzzi, Maurizio, 42122 Reggio Emilia (IT)
(72) Inventor: Iannuzzi, Maurizio, 42122 Reggio Emilia (IT)
(74) Representative: Monelli, Alberto

(57) **Abstract**

Photovoltaic system comprising:
- a first row (1) of photovoltaic panels;
- a second row (2) of photovoltaic panels;
- ballast means that are connected to the photovoltaic panels by means of brackets provided with a support shelf.

## Description

The present invention relates to a photovoltaic system comprising a plurality of successive rows of photovoltaic panels.

Systems are known in which the rows of panels alternate with two different orientations relative to the horizontal so as to define a succession of depressions and peaks two by two. In the technical field they are also called east-west panels (or modules).

Solutions are known in which each panel is rectangular with two long sides and two short sides. Concrete ballasts are also present at each vertex of the rectangle. In particular, the short sides are inclined relative to the horizontal, while the long sides of each panel extend horizontally, one at the top and one at the lowest position of the panel.

The supports have laterally accessible grooves in which a gripping bracket is insertable. Four brackets allow gripping the panel at the short sides and tightening them to the underlying support.

A drawback of this solution is linked to the fact that over the years photovoltaic panels have increased their sizes more and more. The panels must be supported by ballasts, but the larger the size of the panel, the greater the bending stresses. To overcome these drawbacks, use is sometimes made of additional supports placed halfway along the length of the panel. This solves the problem, but has the drawbacks of higher costs and more labour required.

In this context, the technical task underlying the present invention is to propose a photovoltaic system that allows the installation of generously sized panels while optimizing components and costs.

The defined technical task and the specified aims are substantially achieved by a photovoltaic system comprising the technical features set forth in one or more of the appended claims.

Further characteristics and advantages of the present invention will become more apparent from the indicative and thus non-limiting description of a preferred but not exclusive embodiment of a photovoltaic system, as schematically illustrated in the appended drawings, in which:
- figure 1 shows a perspective view of a photovoltaic system according to the present invention;

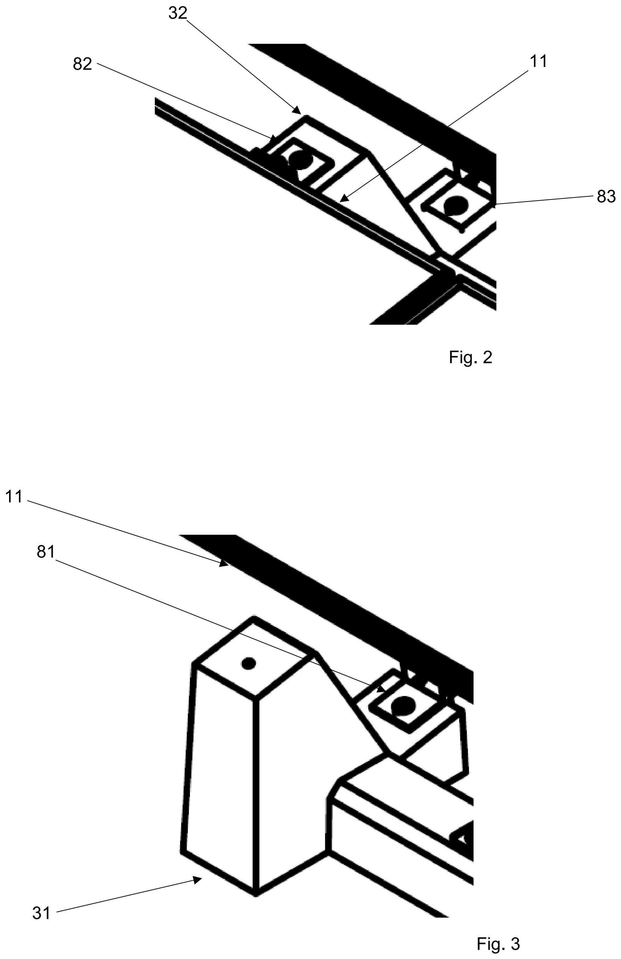

- figures 2, 3 and 4 show details of figure 1;

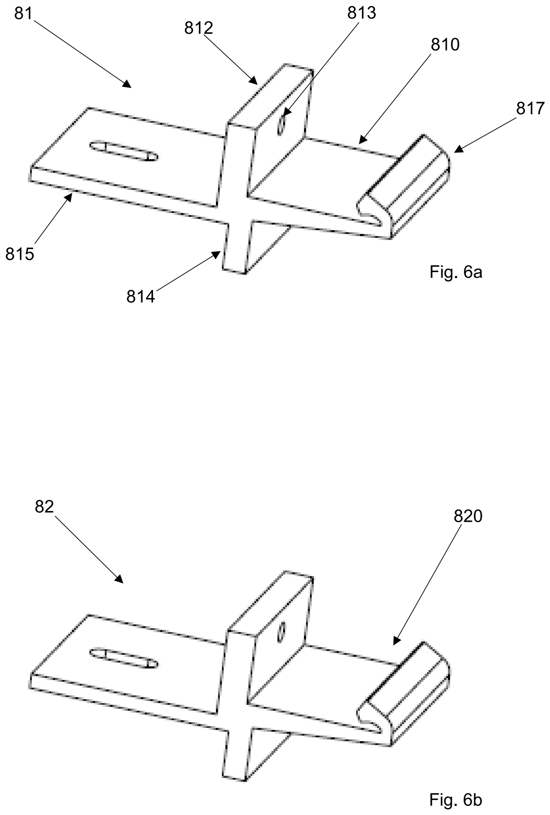

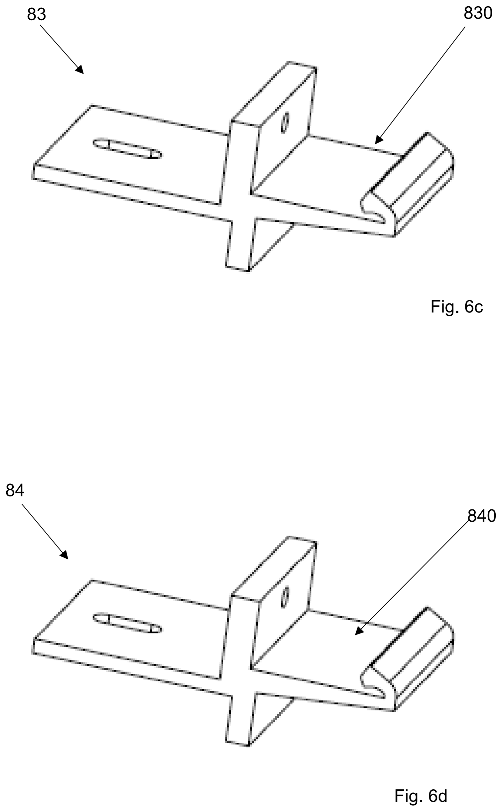

- figures 5, 6a, 6b, 6c, 6d show components of the system of figure 1;
- figure 7 shows a perspective view of a photovoltaic system according to the present invention;
- figure 8 shows a side sectional view of the photovoltaic system of figure 7;
- figure 9 shows a sectional view of a detail of the system of figure 7;
- figure 10 shows a component of the system of figure 7;
- figure 11 shows an alternative solution of the component of figure 10.

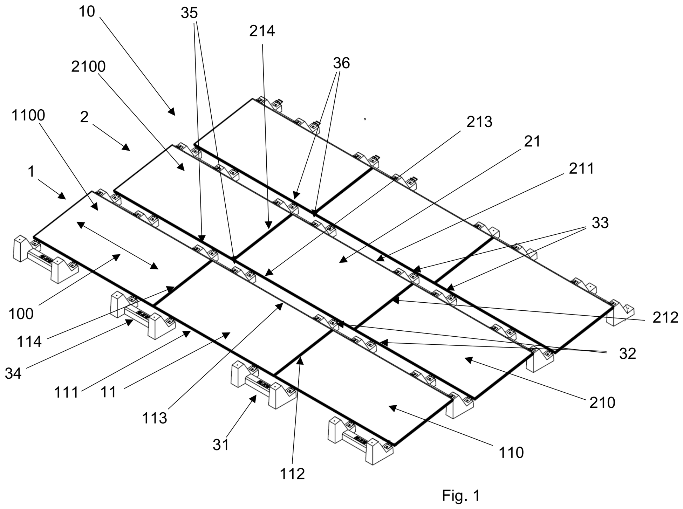

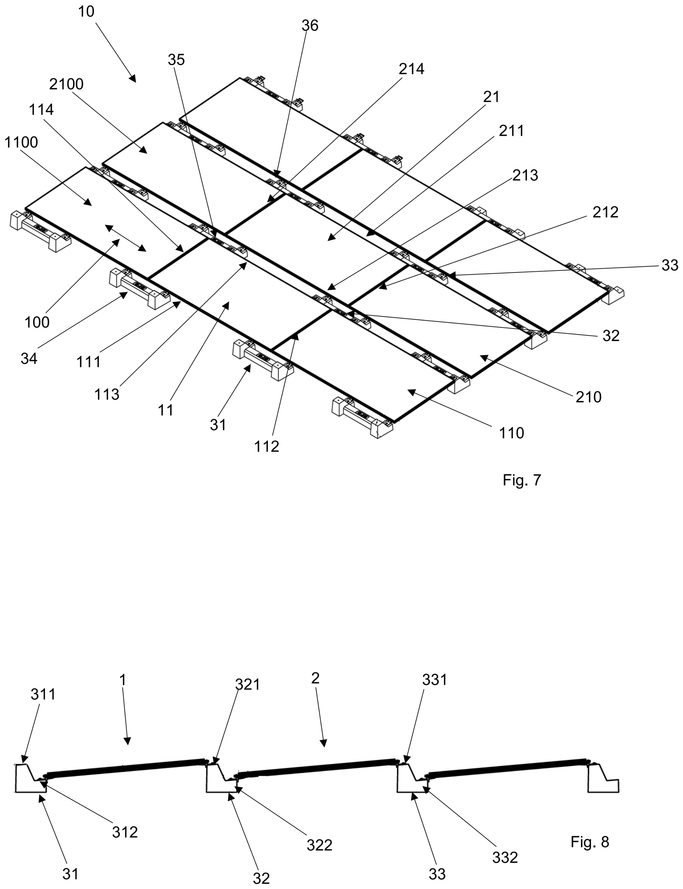

A photovoltaic system is denoted in the attached drawings by reference number 10. The system 10 comprises a modular structure that is suitably repeated along the panels of the rows. The photovoltaic system 10 comprises a first row 1 of photovoltaic panels. The photovoltaic panels of the first row 1 have a rectangular plan with two longer sides and two shorter sides. The two longer sides of the rectangular plan are oriented along a prevalent direction 100 of longitudinal extension of the first row 1. The panels of the first row 1 are inclined relative to the horizontal (for example they can have an angle with a horizontal plane comprised between 3° and 28°; for example the solutions of figures 1 and 7 are preferably identical with the exception that in the first case the panels are inclined by 10° relative to the horizontal while in the second case they are inclined by 5° relative to the horizontal). One of the two longer sides is higher than the other. The first row 1 of photovoltaic panels comprises a first panel 11 in turn comprising a first, a second, a third and a fourth side 111, 112, 113, 114. The first and third sides 111, 113 are longer than the second and fourth sides 112, 114. The third side 113 is situated at a greater height than the first side 111. The first and third sides 111, 113 are horizontal. The second and fourth sides 112, 114 are inclined relative to the horizontal. Suitably one or more of the features described with reference to the first panel 11 may be repeated for each panel of the first row 1.

The first row 1 also comprises a first additional panel 110 side by side with the first panel 11. The first panel 11 and the first additional panel 110 are thus consecutive along the first row. Suitably the first row 1 comprises a second additional panel 1100. Suitably the first panel 11 is interposed between (preferably is adjacent to) the first additional panel 110 and the second additional panel 1100.

The numerical adjective "first" and "second" in the expressions "first additional panel 110" and "second additional panel 1100" allows the two elements to be distinguished, but there might be the second additional panel 1100 in case the first additional panel 110 is absent.

The system 10 comprises a second row 2 of photovoltaic panels. The photovoltaic panels of the second row 2 have a rectangular plan with two longer edges and two shorter edges. The two longer edges of the rectangular plan are oriented along a predominant longitudinal extension of the second row 2. The panels of the second row 2 are inclined relative to the horizontal and one of the two longer edges is higher than the other. The second row 2 of photovoltaic panels comprises a second panel 21 in turn comprising a first, a second, a third and a fourth edge 211, 212, 213, 214. The first and third edges 211, 213 are longer than the second and fourth edges 212, 214. The third edge 213 is situated at a lower height than the first edge 211. The first and third edges 211, 213 are horizontal. The second and fourth edges 212, 214 are inclined relative to the horizontal. The panels of the second row 2 and the panels of the first row 1 have the same inclination relative to the horizontal. They therefore have the same orientation in space. In particular, the first row 1 and the second row 2 extend parallel. Suitably the first panel 11 and the second panel 21 have the same inclination relative to the horizontal; in particular the first and second panels 11, 21 are parallel. The first and second panels 11, 21 have the same orientation in space.

Suitably the panels of the first and second rows 1, 2 have no east-west arrangements. The long sides of the first and second rows 1, 2 therefore alternate in the following order (along a direction orthogonal to that of extension of the first and second rows 1, 2): a long side of the first row 1 being lower, a longer side of the first row 1 being higher, a long side of the second row 2 being lower and a long side of the second row 2 being higher (higher and lower in the following expression are to be considered relative to the height of the geometric centre of gravity of the panels of the first row 1). A transit corridor (for one person) is advantageously absent between the first and second rows 1, 2. The first and second rows 1, 2 extend in fact in rapid succession. The second row 2 is therefore close to the first row 1.

The second row 2 also comprises a first additional panel 210 side by side with the second panel 21. The second panel 21 and the first additional panel 210 are thus consecutive along the first row 1. Suitably the second row 2 comprises a second additional panel 2100. Suitably the second panel 21 is interposed between (and advantageously adjacent to) the first additional panel 210 and the second additional panel 2100. The numerical adjective "first" and "second" in the expressions "first additional panel 210" and "second additional panel 2100" allows the two elements to be distinguished, but there might be the second additional panel 2100 in case the first additional panel 210 is absent.

The system 10 also comprises first ballast means 31 that support at least in part the weight of the first panel 11 (thus supporting at least a part of the weight force and not only of the moment generated by it). The first ballast means 31 are at least in part made of concrete. Suitably in plan, the first ballast means 31 are shaped like the letter H.

The system 10 also comprises second ballast means 32 that support at least in part the weight of the first and second panels 11, 12. The second ballast means 32 are at least in part made of concrete.

The system 10 also comprises third ballast means 33 that support at least in part the weight of the second panel 21. The third ballast means 33 are at least in part made of concrete. The first, second, third ballast means 31, 32, 33 extend in succession aligned one after the other along a line orthogonal to the prevalent direction 100 of extension of the first row 1 (and parallel to the rest plane of the first, second, third ballast means 31, 32, 33). The second support means 32 are interposed between the first and third support means 31, 33.

The second ballast means 32 comprise two reliefs between which a lower zone is interposed. The two reliefs allow contributing to the support of one or two panels of the first row 1. Similarly, the third ballast means 33 comprise two reliefs between which a lower zone is interposed. The two reliefs allow contributing to the support of one or two panels of the second row 2.

The system 10 also comprises a first bracket 81 constraining the first panel 11 to the first ballast means 31. The first bracket 81 is applied to a concrete portion of the first ballast means 31. The first bracket 81 comprises a first shelf 810 that extends from the first ballast means 31 towards the second ballast means 32. The first side 111 of the first panel 11 rests upon said first shelf 810. Suitably, the first shelf extends cantilevered towards the second ballast means 32. The portion of the first side 111 that rests on the first shelf 810 is distant from the beginning and end of the first side 111 (for example, it is at least 15 centimetres away). The system 10 also comprises a second bracket 82 constraining the first panel 11 to the second ballast means 32. The second bracket 82 is applied to a concrete portion of the second ballast means 32. The second bracket 82 comprises a second shelf 820 that extends from the second ballast means 32 towards the first ballast means 31. The third side 113 of the first panel 11 rests upon the second shelf 820. The part of the third side 113 that rests on the second shelf 820 is distant from the beginning and end of the third side 113 (for example, it is at least 15 centimetres away).

The system 10 comprises a third bracket 83 constraining the second panel 21 to the second ballast means 32. The third bracket 83 is applied to a concrete portion of the second ballast means 32. The third bracket 83 comprises a third shelf 830 that extends from the second ballast means 32 towards the third ballast means 33. The third edge 213 of the second panel 21 rests upon the third shelf 830. The portion of the third edge 213 that rests on the third shelf 830 is distant from the beginning and end ends of the third edge 213 (for example, it is at least 15 centimetres away).

The system 10 comprises a fourth bracket 84 constraining the second panel 21 to the third ballast means 33. The fourth bracket 84 is applied to a concrete portion of the third ballast means 33. The fourth bracket 84 comprises a fourth shelf 840 that extends from the third ballast means 33 towards the second ballast means 32. The first edge 211 of the second panel 21 rests upon the fourth shelf 840. The part of the first edge 211 that rests on the fourth shelf 840 is distant from the beginning and end of the first edge 211 (for example, it is at least 15 centimetres away).

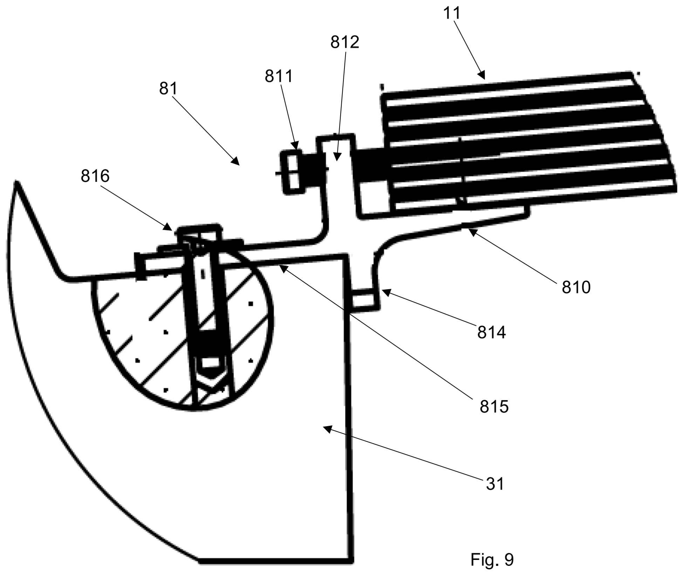

The first bracket 81 comprises a first movable insert 811 (see figure 9; the solution shown in this figure relates to both the solution of figure 1 and the solution of figure 7). This first insert 811 constrains the first bracket 81 to the first panel 11. Suitably the first bracket 81 also comprises a wall 812 provided with an opening 813; typically such opening 813 is a through hole. Typically, this hole 813 has a passage section delimited by a perimeter line closed on itself. For example, this perimeter line is circular. The through hole therefore has a circular section. The insert 811 passes through the opening 813 and is inserted in the first panel 11. Suitably, the insert 811 is a screw that is inserted in a nut screw obtained on the first panel 11.

The wall 812 extends upwards from the first shelf 810. Suitably an imaginary upward or downward vertical projection of the first panel 11 does not intercept the wall 812.

The first bracket 81 comprises a lower abutment 814 intended to abut against the first ballast means 31.

The abutment 814 extends downwards from the first shelf 810. Suitably, the abutment 814 extends at an angle of less than 30° relative to the vertical. Suitably it extends with constant thickness over the entire width of the first bracket 81. The width of the first bracket 81 is to be considered along the prevalent direction of extension of the first row 1.

The first bracket 81 also comprises a rest base 815 on top of the first ballast means 31. The rest base 815 is flat. It lies in a plane inclined relative to the horizontal by less than 20°. The wall 812, the rest base 815, the first shelf 810 and the lower abutment 814 define a same block. It is therefore a single monolithic body. Suitably said block is metallic. On the side, this block is shaped like a cross.

The first bracket 81 also comprises connection means 816 that pass through the rest base 815 and connect it to the first ballast means 31. The connection means 816 comprise/are for example a threaded element (typically a stud which is inserted in a bushing embedded in the first ballast means 31).

The first shelf 810 comprises an end hook 817 intended to connect with the first panel 11. This hook 817 is shaped for example like a crook. Suitably, this hook 817 extends over the entire width of the first shelf 810. In a solution not illustrated, this hook 817 has an "S" shaped cross section. For example, the hook 817 defines a first concavity facing the wall 812 and a second concavity (consecutive to the first) facing upwards.

One or more of the features described above with reference to the first bracket 81 may be repeated for the second or third or fourth bracket 82, 83, 84 (bearing in mind that the second and third brackets 82, 83 are applied to the second ballast means 32 and the fourth bracket 84 is applied to the third ballast means 33 and also that the first and second brackets 81, 82 constrain the first panel 11 while the third and fourth brackets 83, 84 constrain the second panel 21).

A concrete part of the first, second, and third ballast means 31, 32, 33 rest on an underlying surface. They typically rest on the same plane. The above surface can be, for example, a piece of land, the flat roof of a building, etc.

The first ballast means 31 comprise a first relief 311 and a first depression 312. The first bracket 81 is connected to the first depression 312.

The second ballast means 32 comprise a second relief 321 and a second depression 322. The second bracket 82 is connected to the second relief 321, the third bracket 83 is connected to the second depression 322.

The third ballast means 33 comprise a third relief 331 and a third depression 332; the third bracket 83 is connected to the third relief 331. The first ballast means 31 comprise a first and a second reciprocally constrained support 313, 314.

The first support 313 supports at least in part the weight of the first panel 11, the second support 314 supports at least in part the weight of the first additional panel 110 (if the first panel 11 is the first or the last panel of the first row 1 suitably both the first and the second support 313, 314 support the weight of the first panel 11 and not of the additional panel 110).

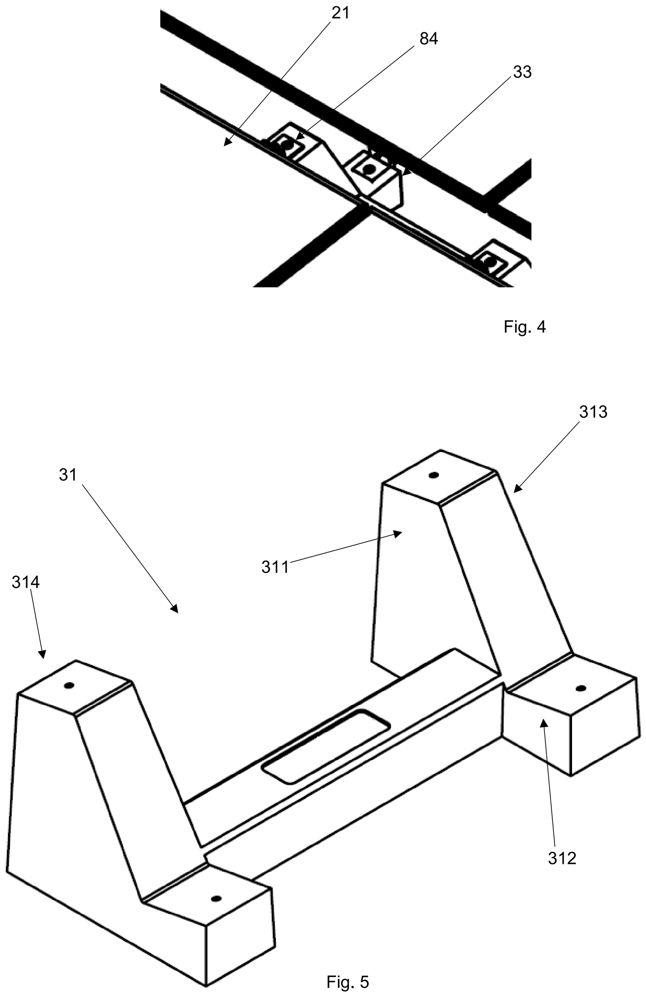

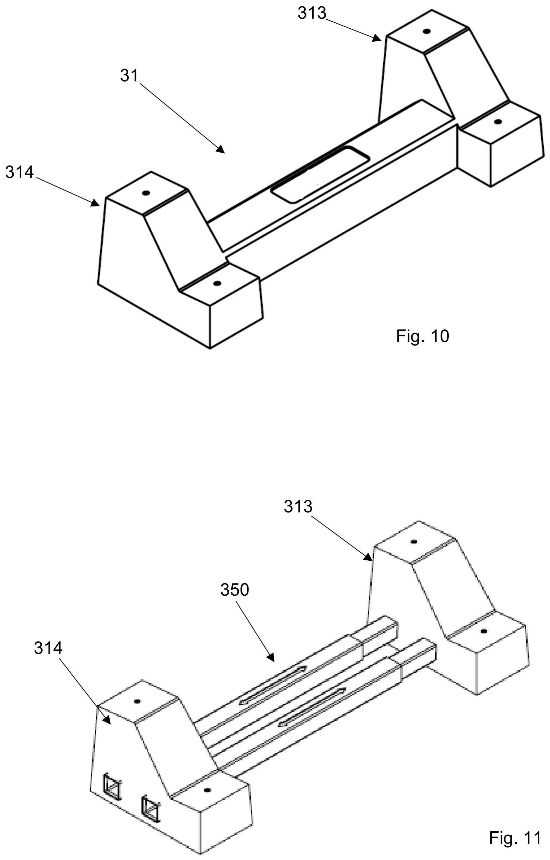

In a solution exemplified in figures 5 and 10, the first and second supports 313, 314 are part of the same monolithic body.

In an alternative solution illustrated in figure 11 the first and second supports 313, 314 may be moved reciprocally away/nearer. In this case, the first and second supports 313, 314 define two blocks connected by a guide 350 that allows them to be moved nearer and away. In this case, a system for locking the distance between the first and second supports 313, 314 is preferably present. Such a locking system can be unlocked (at least temporarily) to allow adjustment of the distance between the first and second supports 313, 314.

Suitably the system 10 comprises fourth ballast means 34. They support at least in part the weight of the first panel 11 and the second additional panel 1100. The fourth ballast means 34 are at least in part made of concrete. The system 10 comprises a bracket for connecting the first panel 11 to the fourth ballast means 34 and a bracket for connecting the second additional panel 1100 to the fourth ballast means 34. Such brackets may have one or more of the features described above with reference to the first bracket 81.

The system 10 comprises fifth ballast means 35 that support at least in part the weight of the first panel 11, of the second panel 21, of the second additional panel 1100, of the second additional panel 2100. The fifth ballast means 35 are at least in part made of concrete.

The system 10 comprises a bracket for connecting the first panel 11 to the fifth ballast means 35, a bracket for connecting the second additional panel 1100 to the fifth ballast means 35, a bracket for connecting the second additional panel 2100 to the fifth ballast means 35 and a bracket for connecting the second panel 21 to the fifth ballast means 35. Such brackets may have one or more of the features described above with reference to the first bracket 81.

The system 10 comprises six ballast means 36 that support at least in part the weight of the second panel 21 and of the second additional panel 2100. The sixth ballast means 36 are at least in part made of concrete. The system 10 comprises a bracket for connecting the second panel 21 to the sixth ballast means 36 and a bracket for connecting the second additional panel 2100 to the sixth ballast means 36. Such brackets may have one or more of the features described above with reference to the first bracket 81.

Suitably, what has been described with reference to the first, second and third ballast means 31 can be repeated respectively for the fourth, fifth and sixth ballast means 34, 35, 36.

In particular, the fourth ballast means 34 are aligned with the first ballast means 31 along the prevalent direction 100 of extension of the first row 1. Suitably, the first panel 11 has no further support elements interposed between the first and fourth ballast means 31, 34.

The fifth ballast means 35 are aligned with the second ballast means 32 along the prevalent direction of extension of the first and second rows 1, 2. The fifth ballast means 35, as well as the second ballast means 32 connect the first and second rows 1, 2. Suitably, the first and second panels 11, 12 do not have support elements interposed between the second and fifth ballast means 32, 35

The sixth ballast means 36 are aligned with the third ballast means 33 along the prevalent direction of extension of the second row 2. Suitably, the second panel 12 has no further support elements interposed between the third and sixth ballast means 33, 36.

The present invention achieves important advantages.

First of all, it allows the use of panels of considerable extension lengthwise, better supporting the weight.

It also allows to optimize the necessary components and also allows a construction that is as modular as possible.

The invention thus conceived is susceptible of numerous modifications and variants, all falling within the scope of the inventive concept that characterises it. Moreover, all the details may be replaced by other technically equivalent elements. All the materials used, as well the dimensions, may in practice be any whatsoever according to needs.

## Claims

1. A photovoltaic system comprising:
- a first row (1) of photovoltaic panels; the photovoltaic panels of the first row (1) having a rectangular plan with two longer sides and two shorter sides; the two longer sides of the rectangular plan being oriented along a prevalent direction (100) of longitudinal extension of the first row (1); the panels of the first row (1) being inclined relative to the horizontal and one of the two longer sides being higher than the other; the first row (1) of photovoltaic panels comprises a first panel (11) in turn comprising a first, a second, a third and a fourth side (111, 112, 113, 114); the first and third sides (111, 113) being longer than the second and fourth sides (112, 114); the third side (113) being situated at a greater height than the first side (111);
- a second row (2) of photovoltaic panels; the photovoltaic panels of the second row (2) having a rectangular plan with two longer edges and two shorter edges; the two longer edges of the rectangular plan being oriented along a prevalent longitudinal extension of the second row (2); the panels of the second row (2) being inclined relative to the horizontal and one of the two longer edges being higher than the other; the second row (2) of photovoltaic panels comprising a second panel (21) in turn comprising a first, a second, a third and a fourth edge (211, 212, 213, 214); the first and third edges (211, 213) being longer than the second and fourth edges (212, 214); the third edge (213) being situated at a lower height than the first edge (211);
- first ballast means (31) that support at least in part the weight of the first panel (11); said first ballast means (31) being at least in part made of concrete;
- second ballast means (32) that support at least in part the weight of the first and second panels (11, 12); said second ballast means (32) being at least in part made of concrete;
- third ballast means (33) that support at least in part the weight of the second panel (12); said third ballast means (33) being at least in part made of concrete;
**characterised in that** it comprises:
i) a first bracket (81) constraining the first panel (11) to the first ballast means (31); said first bracket (81) being applied to a concrete portion of the first ballast means (31); the first bracket (81) comprising a first shelf (810) that extends from the first ballast means (31) towards the second ballast means (32); at least a part of the first side (111) of the first panel (11) resting upon said first shelf (810);
ii) a second bracket (82) constraining the first panel (11) to the second ballast means (32); said second bracket (82) being applied to a concrete portion of the second ballast means (32); the second bracket (32) comprising a second shelf (820) that extends from the second ballast means (32) towards the first ballast means (31); at least a part of the third side (113) of the first panel (11) resting upon said second shelf (820);
iii) a third bracket (83) constraining the second panel (21) to the second ballast means (32); said third bracket (83) being applied to a concrete portion of the second ballast means (32); the third bracket (83) comprising a third shelf (830) that extends from the ballast means (32) towards the third ballast means (33); at least a part of the third edge (213) of the second panel (21) resting upon said third shelf (830);
iv) a fourth bracket (84) constraining the second panel (21) to the third ballast means (33); said fourth bracket (84) being applied to a concrete portion of the third ballast means (33); the fourth bracket (84) comprising a fourth shelf (840) that extends from the third ballast means (33) towards the second ballast means (32); at least a part of the first edge (211) of the second panel (21) resting upon said fourth shelf (840).

2. The system according to claim 1, **characterised in that** the first bracket (81) comprises a first movable insert (811) and a wall (812) provided with an opening (813); said insert (811) passing through said opening (813) and being inserted into the first panel (11).

3. The system according to claim 2, **characterised in that** the wall (812) extends upwards from the first shelf (810).

4. The system according to any one of the preceding claims, **characterised in that** the first bracket (81) comprises a lower abutment (814) intended to abut against the first ballast means (31).

5. The system according to claim 4, **characterised in that** said abutment (814) extends downwards from the first shelf (810).

6. The system according to any one of the preceding claims, **characterised in that** the first bracket (81) comprises:
- a rest base (815) on top of the first ballast means (31);
- connection means (816) that pass through the rest base (815) and connect it to the first ballast means (31).

7. The system according to any one of the preceding claims, **characterised in that** said first shelf (810) comprises an end hook (817) intended to be connected with the first panel (11).

8. The system according to any one of the preceding claims, **characterised in that** a concrete part of the first, second, and third ballast means (31, 32, 33) rest on an underlying surface.

9. The system according to any one of the preceding claims, **characterised in that**:
- the first ballast means (31) comprises a first relief (311) and a first depression (312); the first bracket (81) being connected to the first depression (312);
- the second ballast means (32) comprises a second relief (321) and a second depression (322); the second bracket (82) being connected to the second relief (321), the third bracket (83) being connected to the second depression (322);
- the third ballast means (33) comprises a third relief (331) and a third depression (332); the third bracket (83) being connected to the third relief (331).

10. The system according to any one of the preceding claims, **characterised in that** the first ballast means (31) comprises a first and a second reciprocally constrained support (313, 314), intended to support at least one of the panels of the first row (1).

11. The system according to claim 10, **characterised in that** the first support (313) bears at least in part the weight of the first panel (11), and the second support (314) bears at least in part the weight of a first additional panel (110).

12. The system according to claim 10 or 11, **characterised in that** the first and second supports (313, 314) are part of a same monolithic body.

13. The system according to claim 10 or 11, **characterised in that** the first and second supports (313, 314) may be moved reciprocally away/nearer.
